# EUROPÄISCHE PATENTSCHRIFT

(11) **EP 0 941 881 B1**
(45) Veröffentlichungstag und Bekanntmachung des Hinweises auf die Patenterteilung: **28.05.2003**
(21) Anmeldenummer: 99100427.6
(22) Anmeldetag: 11.01.1999
(51) Int. Cl.: B60J 7/00

(54) **Schiebehimmel für ein Kraftfahrzeug-Schiebedach**
Sliding screen for sliding roof of vehicle
Store coulissant pour toit coulissant de véhicule

(30) Priorität: 11.03.1998 DE 19810505
(43) Veröffentlichungstag der Anmeldung: 15.09.1999
(73) Patentinhaber: ArvinMeritor GmbH, 63128 Dietzenbach (DE)
(72) Erfinder: Stehning, Kai, Dipl.-Ing., 65812 Bad Soden (DE); Niehbur, Frank, Dipl.-Ing., 38518 Gifhorn (DE)
(74) Vertreter: Oppermann, Ewald, Dipl.-Ing.

(56) Entgegenhaltungen:
- EP-A- 0 031 914
- DE-C- 3 527 839

## Beschreibung

Die Erfindung bezieht sich auf einen Schiebehimmel für ein Kraftfahrzeug-Schiebedach, bestehend aus einem starr ausgebildeten Himmelkörper, der im Bereich seiner Vorderkante mit einer Ausnehmung versehen ist, in welche eine Entlüftungsleiste mit Griffmulde einsetzbar und durch Rastverbindungen zu befestigen ist, entsprechend dem Oberbegriff des Patentanspruchs 1.

Bei einem derartigen bekannten Schiebehimmel (DE 35 27 839 C1) ist die Entlüftungsleiste an ihrem vorderen und an ihrem hinteren Rand mit einer Nut versehen, die mit den zugehörigen Kanten der Ausnehmung Rastverbindungen bilden. Hierbei greifen die Kanten der Ausnehmung auf ihrer ganzen Länge mit den beiden Nuten verrastend ein. Es hat sich jedoch gezeigt, daß der Rasteingriff bei der Montage nur schwer herbeizuführen ist, insbesondere weil die Verrastung über die ganze Länge der Ausnehmung und der Entlüftungsleiste vorzunehmen ist. Außerdem treten an der Entlüftungsleiste unerwünschte, weiter unten noch näher erläuterte wellenförmige Verformungen auf.

In einer praktischen Ausführungsform wurde die Entlüftungsleiste nur noch mit ihrem hinteren Rand auf die zugehörige Kante der Ausnehmung aufgeschoben, während am vorderen Rand der Entlüftungsleiste die Verbindung mit dem Himmelkörper über eine Reihe von gegenseitig beabstandeten und aus dem Material der Entlüftungsleiste gebildeten Thermonieten erfolgte. Dieses erleichterte zwar die Montage der Entlüftungsleiste an dem Himmelkörper, jedoch traten ebenfalls unerwünschte wellenförmige Verformungen an der Entlüftungsleiste, hervorgerufen durch unterschiedliche Ausdehnungskoeffizienten der für die Entlüftungsleiste einerseits und den Himmelkörper andererseits verwendeten unterschiedlichen Kunststoffwerkstoffe, auf.

Die Verwendung von Kunststoffen mit übereinstimmenden Ausdehnungskoeffizienten ist aus verschiedenen Gründen nicht möglich, insbesondere weil der Himmelkörper verhältnismäßig dickwandig ausgebildet und mit Glasfasern und Metalleinlagen armiert sein kann, wobei es auf homogen aussehende Oberflächen nicht ankommt, weil die untere Sichtfläche des Himmelkörpers ohnehin mit einem Himmelstoff bezogen ist. Dagegen erfährt der für die Spritzformung der Entlüftungsleiste verwendete nicht armierte Kunststoff eine verhältnismäßig dünnwandige Ausformung, wobei die Oberflächen der Entlüftungsleisten, die zu einem erheblichen Teil im Sichtbereich liegen und nicht verkleidet werden, ein homogenes Aussehen erhalten sollen.

Der Erfindung liegt die Aufgabe zugrunde, einen Schiebehimmel entsprechend dem Oberbegriff des Patentanspruchs 1 bereitzustellen, bei dem unter Beibehaltung einer die Montage erleichternden Verrastung von Himmelkörper und Entlüftungsleiste wellenförmige Verformungen der Entlüftungsleiste nicht auftreten.

Die gestellte Aufgabe wird durch die im Patentanspruch 1 angegebenen Merkmale gelöst. Vorteilhafte und/oder zweckmäßige weitere Ausbildungen gehen aus den Unteransprüchen hervor und sind nachfolgend ebenfalls näher beschrieben.

Bei dem erfindungsgemäß ausgebildeten Schiebehimmel befinden sich die Rastverbindungen nicht in der Ebene der Himmelkörperplatte, sondern im Bereich der leicht federnd verformbaren vorderen Wandelemente der Entlüftungskanäle oberhalb der Ebene der Himmelkörperplatte. Außerdem erfolgt hierbei kein sich über eine Kantenlänge der Ausnehmung im Himmelkörper erstreckende Verrastung, sondern nur über die kurzen Längen der Rastvorsprünge an den vorderen Wandelementen. Die federnde Beschaffenheit der vorderen Wandelemente im Anbringungsbereich der Rastvorsprünge erlaubt nicht nur eine erleichterte Montage, sondern auch eine spielfreie Auflage der Rastvorsprünge auf den zugeordneten, ebenfalls oberhalb der Ebene der Himmelkörperplatte befindlichen Rastflächen am Himmelkörper. Dennoch sind die Andruck- und Reibungskräfte zwischen den Rastvorsprüngen und den Rastflächen gering genug, um längenausgleichende Relativverschiebungen zwischen den Rastelementen und den Rastflächen, d.h. zwischen der Entlüftungsleiste und dem Himmelkörper, infolge unterschiedlicher Wärmeausdehnungskoeffizienten der verwendeten Werkstoffe zuzulassen, auch wenn der Himmelkörper ganz oder teilweise aus einem metallischen Werkstoff hergestellt werden soll. Eine wichtige Voraussetzung für die nur in engen Grenzen erforderliche Relativverschiebbarkeit zwischen Entlüftungsleiste und Himmelkörper ist das erfindungsgemäß vorzusehende Längsspiel zwischen der Entlüftungsleiste und der Ausnehmung im Himmelkörper.

Die Entlüftungsleiste läßt sich besonders wirtschaftlich fertigen, wenn sie entsprechend Patentanspruch 2 einteilig mit den Rastvorsprüngen ausgebildet ist, wobei die Rastvorsprünge schon bei der Fertigung der Entlüftungsleiste ihre richtige Ausrichtung zur Ebene des Himmelkörpers erhalten.

Dem Himmelkörper können seine den Rastvorsprüngen der Entlüftungsleiste zugeordneten Rastflächen auch schon während der Formgebung des Himmelkörpers durch die im Patentanspruch 3 angegebene Ausgestaltung angeformt werden, wobei die dabei gebildete Rippe die Quersteifigkeit des Himmelkörpers erhöht und zugleich die Möglichkeit eröffnet, die Höhenlage der Rastflächen über der Ebene des Himmelkörpers durch in die Fertigungsform einzulegende Formplättchen unterschiedlicher Dicke zu bestimmen. Auf letztere Weise können die Andruck- und Reibungskräfte zwischen Rastvorsprüngen und Rastflächen geändert werden, ohne daß dafür Änderungen an der Entlüftungsleiste bzw. ihrem Formwerkzeug erforderlich sind.

Werden einerseits die Aufnahmeräume zwischen den hinteren Wandelementen der Entlüftungskanäle und dem Flanschrand und andererseits die hintere Kante der Ausnehmung im Himmelkörper wie im Patentanspruch 4 angegeben komplementär ausgebildet, läßt sich die Entlüftungsleiste durch Formschluß der miteinander eingreifenden Elemente auch an der den Rastverbindungen gegenüberliegenden Seite der Ausnehmung praktisch spielfrei aufstecken. Im Ergebnis ist die Entlüftungsleiste zuverlässig und spielfrei an dem Himmelkörper befestigt und kann dennoch in ihrer Längsrichtung aufgrund unterschiedlicher Wärmeausdehnungskoeffizienten der verwendeten Werkstoffe erforderlich werdende (geringe) Ausgleichsverschiebungen ausführen. Die Entlüftungsleiste erfährt bei allen vorkommenden Temperaturen keinerlei sichtbare Verformungen und liegt mit ihrem umlaufenden Flanschrand dem Himmelkörper stets flächig an.

Weitere Einzelheiten der Erfindung werden anhand der ein Ausführungsbeispiel darstellenden Zeichnung nachfolgend näher erläutert. Darin zeigt:
- Fig. 1: die Draufsicht auf den Schiebehimmel,
- Fig. 2: einen vergrößerten Ausschnitt der Draufsicht entsprechend dem Ausschnittskreis II in Fig. 1,
- Fig. 3: den abgebrochenen und gegenüber Fig. 2 vergrösserten Schnitt entlang der Linie III-III in Fig. 2,
- Fig. 4: die abgebrochene Draufsicht auf die Entlüftungsleiste,
- Fig. 5: eine abgebrochene Seitenansicht der Entlüftungsleiste,
- Fig. 6: die abgebrochene Unteransicht der Entlüftungsleiste und
- Fig. 7: den abgebrochenen und gegenüber Fig. 4 vergrößerten Schnitt durch die Entlüftungsleiste entlang der Linie VII-VII in Fig. 4.

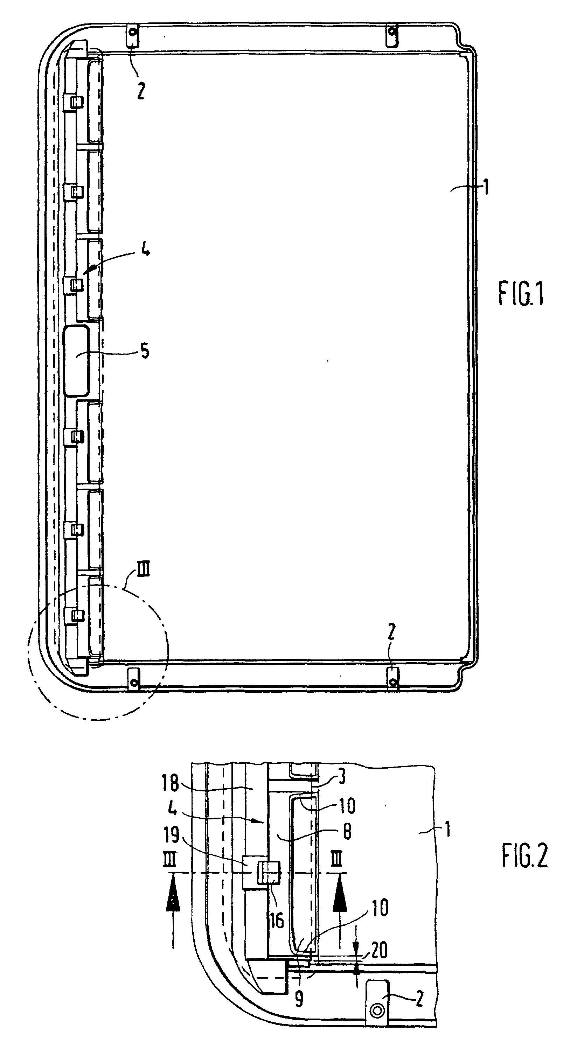

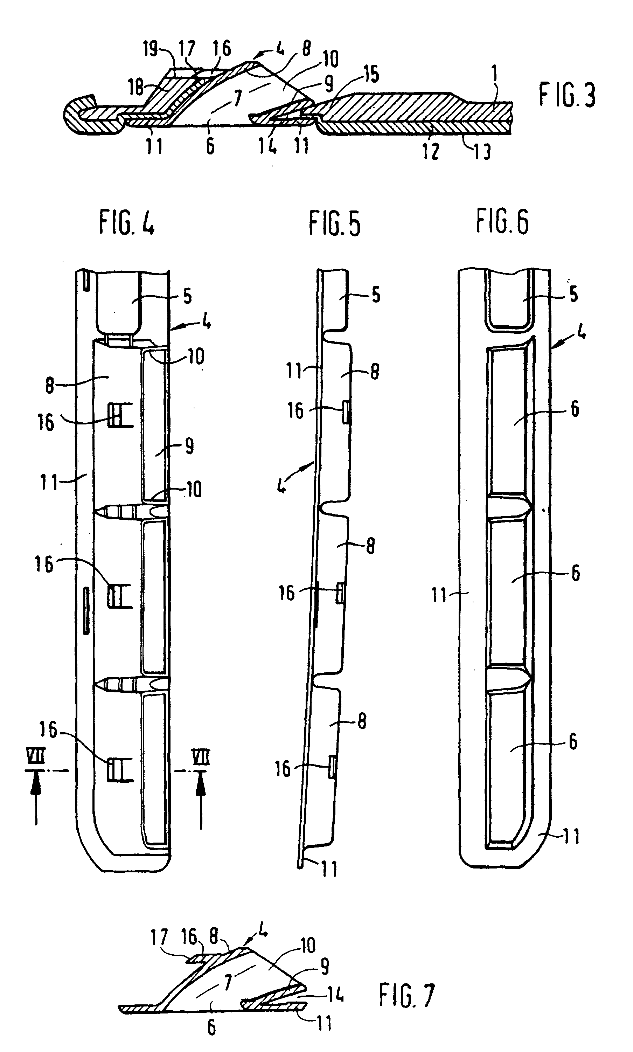

Die Draufsichtdarstellungen der Fig. 1, 2 und 4 zeigen Ansichten des Schiebehimmels bzw. der Entlüftungsleiste von oben gesehen, während die Unteransicht gemäß Fig. 6 die Entlüftungsleiste von ihrer nach der Montage des Schiebehimmels dem Fahrzeuginnenraum zugekehrten Sichtseite zeigt.

Der Schiebehimmel, der bei allen bekannten Schiebedachausführungen einschließlich der sogenannten Schiebehebedächer eingesetzt wird, deckt bei geschlossenem Dach die Innenseite des der Dachöffnung zugeordneten Schiebedeckels ab. Schiebehimmel kommen sowohl bei aus Blech gefertigten Deckeln als auch bei Glasdeckeln zum Einsatz. Sie haben dabei die Aufgabe, bei geöffnetem Deckel bzw. bei Dächern mit Glasdeckeln auch bei geschlossenem Deckel den Lichteinfall zu dämpfen und die Entlüftung zu regulieren. Da sich der Schiebehimmel im sichtbaren Bereich des Fahrzeuginnenraums befindet, ist er in seiner Oberflächenbeschaffenheit, mindestens aber in seiner Farbgebung dem übrigen Fahrzeughimmel anzupassen. Er besteht aus einem platten- oder rahmenartig starr ausgebildeten Himmelkörper 1, der an seinen beiden Seitenkanten zur verschiebbaren Lagerung an Führungsschienen des Schiebedachs ausgestaltet, d.h. mit entsprechenden Führungselementen 2 versehen ist. Das bekannte konstruktive Umfeld des Schiebehimmels ist in den Zeichnungen nicht dargestellt und wird hier nicht näher beschrieben, weil sich die Erfindung darauf nicht bezieht.

Im Bereich der Vorderkante des Himmelkörpers 1 befindet sich im Ausführungsbeispiel eine sich entlang der Vorderkante erstreckende Ausnehmung 3, in welche eine daran angepaßte allgemein mit der Bezugszahl 4 bezeichnete Entlüftungsleiste, die in der Mitte mit einer Griffmulde 5 versehen ist, auf noch zu beschreibende Weise eingesetzt und dabei durch Rastverbindungen zu befestigen ist. Die Entlüftungsleiste 4 besitzt eine Mehrzahl (im gezeichneten Ausführungsbeispiel sechs) von schlitzförmigen parallel zu der Vorderkante des Himmelkörpers 1 ausgerichtete und in Reihe angeordnete Entlüftungsöffnungen 6 (Fig. 6). Die Entlüftungsöffnungen 6 beginnen an der mit der Unterseite des Himmelkörpers 1 etwa fluchtenden Unterseite der Entlüftungsleiste 4, wie am besten aus Fig. 3 ersichtlich ist.

An die Entlüftungsöffnungen schließen sich nach oben offene und nach hinten gerichtete Entlüftungskanäle 7 an, die von Wandelementen der Entlüftungsleiste 4 begrenzt sind. Jeder Entlüftungskanal 7 wird von vier Wandelementen begrenzt, nämlich einem vorderen Wandelement 8, einem hinteren Wandelement 9 und zwei seitlichen Wandelementen 10. Die Entlüftungsöffnungen 6 mit den daran anschließenden Entlüftungskanälen 7 sorgen aufgrund ihrer konstruktiven Ausbildung und Anordnung dafür, daß bei im Fahrbetrieb auftretendem geringen Unterdruck oberhalb des Schiebehimmels ein vom Fahrzeuginneren über die Entlüftungsöffnungen 6 und die Entlüftungskanäle 7 nach außen gerichteter Luftstrom entsteht, der den Fahrzeuginnenraum wirksam entlüftet.

Die Entlüftungsleiste 4 weist einen umlaufenden Flanschrand 11 auf, welcher einem vertieft liegenden umlaufenden Rand der Ausnehmung 3 von unten aufliegt. Dabei liegt der Flanschrand 11 nicht unmittelbar dem Himmelkörper 1 auf, sondern einer Verkleidungsschicht, welche die Unterseite des Schiebehimmels und seine Seitenränder bedeckt. Die Verkleidungsschicht besteht beispielsweise aus einer weichen Schaumschicht 12 und einer die Sichtfläche bildenden und in ihrer Struktur und/oder Farbe an das Fahrzeuginterieur angepaßten textilen Gewebeschicht 13. An der Auflagefläche des Flanschrandes 11 ist die weiche Schaumschicht 12 auf eine geringere Schichtdicke zusammengepreßt, wie ebenfalls Fig. 3 veranschaulicht.

Die hinteren Wandelemente 9 der Entlüftungskanäle 7 bilden einen seitlich offenen Aufnahmeraum 14 für das Aufstecken der Entlüftungsleiste 4 auf den hinteren Rand 15 der Ausnehmung 3. Der Aufnahmeraum 14 zwischen dem hinteren Wandelement 9 und dem Flanschrand 11 besitzt einen sich nach außen erweiternden spitzwinkligen Querschnitt, wie die Fig. 3 und 7 verdeutlichen. Der hintere Rand 15 der Ausnehmung 3 weist mindestens im Eingriffsbereich mit dem Aufnahmeraum 14 einen entsprechenden spitzwinkligen Querschnitt auf. Aufgrund dieser Ausbildung wird die Entlüftungsleiste 4 beim Aufstecken auf den hinteren Rand 15 keilartig und spielfrei unter Zusammendrückung der weichen Schaumschicht 12 am Himmelkörper 1 festgelegt.

An den vorderen Wandelementen 8 der Entlüftungskanäle 7, und zwar im oberen Bereich der Wandelemente 8 und etwa in deren Längenmitte, sind Rastvorsprünge 16 vorgesehen. Es ist ersichtlich, daß sich die Rastvorsprünge 16 aufgrund ihres Anbringungsorts in einem verhältnismäßig elastisch federnden Bereich der Entlüftungsleiste 4 befinden. Im gezeichneten Beispiel befinden sich auf jeder Seite der Griffmulde 5 je drei Rastvorsprünge 16, die auf jeder Seite der Griffmulde 5 etwa mit gleichen gegenseitigen Abständen angebracht sind. Die Rastvorsprünge 16 sind einteilig mit allen Teilen der Entlüftungsleiste 4 aus einem geeigneten thermoplastischen Kunststoff, beispielsweise ABS, spritzgeformt und sind nahe dem oberen Ende der vorderen Wandelemente 8 der Entlüftungskanäle 7 etwa parallel zur Ebene des Himmelkörpers 1 angeordnet. Vorn an den Rastvorsprüngen 16 befindet sich jeweils eine das Aufrasten erleichternde Schrägfläche 17.

Der Himmelkörper 1 besitzt zwischen seiner Vorderkante und der Ausnehmung 3 eine nach oben vorspringende parallel zur benachbarten Ausnehmungskante gerichtete Rippe 18, wie am besten aus Fig. 3 entnehmbar ist. Auf dieser Rippe 18 befinden sich den Rastvorsprüngen 16 zugeordnete Rastflächen 19, die parallel zu den Rastvorsprüngen ausgerichtet sind. Die Rastflächen 19 werden bei der Formung des Himmelkörpers 1 aus einem geeigneten Kunststoff, beispielsweise einem harten PU-Schaum, angebracht.

Die Entlüftungsleiste 4 ist mit Längsspiel in die Ausnehmung 3 eingesetzt, so daß sich die Rastvorsprünge 16 auf den Rastflächen 19 in Abhängigkeit von den Wärmeausdehnungskoeffizienten der verwendeten Werkstoffe und den herrschenden Temperaturverhältnissen spannungsausgleichend verschieben können. Das Längsspiel ist in Fig. 2 durch das mit der Bezugszahl 20 bezeichnete Spaltmaß angedeutet. Entsprechende Spaltmaße befinden sich selbstverständlich auch zu beiden Seiten der Griffmulde 5 und am anderen Ende der Entlüftungsleiste 4.

Bei dem beschriebenen und gezeichneten bevorzugten Ausführungsbeispiel befindet sich die mindestens eine Ausnehmung 3 im Bereich der Vorderkante des Schiebehimmels. Sie kann aber auch in einem anderen dafür geeigneten Bereich des Schiebehimmels angebracht werden, beispielsweise im Bereich seiner Hinterkante. Entsprechendes gilt für die Rippe 18 und ihre Rastflächen 19. Die Griffmulde muß nicht unbedingt wie bei dem bevorzugten Ausführungsbeispiel Bestandteil der Entlüftungsleiste 4 sein. Falls der Schiebehimmel elektromotorisch angetrieben wird, kann auf die Anbringung einer Griffmulde sogar ganz verzichtet werden.

Der hier beschriebene und in den Zeichnungen dargestellte Schiebehimmel für die unterseitige Abdeckung des Schiebedekkels einer Schiebedachkonstruktion und zur Entlüftung des Fahrzeuginnenraums bei partiell öffnungsverschobenem oder hinten ausgestelltem Schiebedeckel besteht aus einem starren Himmelkörper 1 und einer vorn angebrachten Entlüftungsleiste 4. Die Entlüftungsleiste 4 ist mit Längsspiel in eine Ausnehmung des Himmelkörpers 1 eingesetzt und darin auf besondere Weise so verrastet, daß unterschiedliche Wärmeausdehnungskoeffizienten der für den Himmelkörper 1 und die Entlüftungsleiste 4 verwendeten unterschiedlichen Werkstoffe nicht zu unerwünschten Wellungen der Entlüftungsleiste 4 unter entsprechenden Temperaturbedingungen führen können, weil an den Verrastungsstellen durch Schiebebewegungen zwischen den Rastelementen Spannungen ausgeglichen werden. Die Entlüftungsleiste 4 liegt daher der verkleideten unteren Sichtfläche des Schiebehimmels immer glattflächig an. Die Montage der Entlüftungsleiste am Himmelkörper 1 erfolgt so, daß zunächst die Entlüftungsleiste mit Aufnahmeräumen 14 auf den hinteren Rand 15 der Ausnehmung 3 des Himmelkörpers 1 aufgesteckt und dann in ihrem vorderen Bereich nach oben verschwenkt wird, bis die Rastvorsprünge 16 federnd oberhalb der Rastflächen 19, aber diesen anliegend, einschnappen.

## Patentansprüche

1. Schiebehimmel für ein Kraftfahrzeug-Schiebedach, bestehend aus einem platten- oder rahmenartig starr ausgebildeten Himmelkörper (1), der an seinen beiden Seitenkanten zur verschiebbaren Lagerung an Führungsschienen des Schiebedachs ausgestaltet und im Bereich seiner Vorderkante mit mindestens einer sich entlang der Vorderkante erstreckenden Ausnehmung (3) versehen ist, in welche eine daran angepaßte Entlüftungsleiste (4) mit Griffmulde (5) einsetzbar und dabei durch Rastverbindungen zu befestigen ist, wobei die Entlüftungsleiste (4) eine Mehrzahl von schlitzförmigen parallel zu der Vorderkante des Himmelkörpers (1) ausgerichteten und in Reihe angeordneten Entlüftungsöffnungen (6) aufweist, die an der mit der Unterseite des Himmelkörpers (1) etwa fluchtenden Unterseite der Entlüftungsleiste (4) beginnen und daran anschließend als von Wandelementen (8, 9 und 10) der Entlüftungsleiste (4) begrenzte nach oben offene und nach hinten gerichtete Entlüftungskanäle (7) ausgebildet sind, und wobei die Entlüftungsleiste (4) einen umlaufenden Flanschrand (11) aufweist, welcher einem umlaufenden Rand der mindestens einen Ausnehmung (3) aufliegt, **dadurch gekennzeichnet, daß** die Entlüftungskanäle (7) von jeweils vier paarweise gegenüberliegenden Wandelementen (8, 9 bzw. 10) der Entlüftungsleiste (4) begrenzt sind, von denen die hinteren Wandelemente (9) jeweils zusammen mit dem Flanschrand (11) einen seitlich offenen Aufnahmeraum (14) für das Aufstecken der Entlüftungsleiste (4) auf den hinteren Rand (15) der mindestens einen Ausnehmung (3) vorsehen, während an den vorderen Wandelementen (8) im oberen Bereich und etwa in der Längsmitte der Wandelemente (8) Rastvorsprünge (16) vorgesehen sind, die zusammen mit ihnen zugeordneten Rastflächen (19) am Himmelkörper (1) die Rastverbindungen bilden, und daß die Entlüftungsleiste (4) in die mindestens eine Ausnehmung (3) mit Längsspiel (Spaltmaß 20) eingesetzt ist und die Rastvorsprünge (16) an den Rastflächen (19) längsverschiebbar sind.

2. Schiebehimmel nach Anspruch 1, **dadurch gekennzeichnet, daß** die Rastvorsprünge (16) einteilig mit allen Teilen der Entlüftungsleiste (4) spritzgeformt sind und nahe dem oberen Ende der vorderen Wandelemente (8) der Entlüftungskanäle (7) etwa parallel zur Ebene des Himmelkörpers (1) angeordnet sind.

3. Schiebehimmel nach Anspruch 1 oder 2, **dadurch gekennzeichnet, daß** der Himmelkörper (1) zwischen seiner Vorderkante und der mindestens einen Ausnehmung (3) eine nach oben vorspringende parallel zur benachbarten Ausnehmungskante gerichtete Rippe (18) besitzt, auf welcher sich die Rastflächen (19) befinden.

4. Schiebehimmel nach einem der Ansprüche 1 bis 3, **dadurch gekennzeichnet, daß** der Aufnahmeraum (14) zwischen dem hinteren Wandelement (9) jeden Entlüftungskanals (7) und dem Flanschrand (11) einen sich nach außen erweiternden spitzwinkligen Querschnitt besitzt, und daß der hintere Rand (15) der mindestens einen Ausnehmung (3) wenigstens im Eingriffsbereich mit dem Aufnahmeraum (14) einen entsprechenden spitzwinkligen Querschnitt aufweist.

## Claims

1. Sliding interior sunroof panel for an automobile sunroof, consisting of a plate or frame-type rigidly formed interior roof panel (1), which is formed at its both side edges for the displaceable positioning of the sunroof on guide rails and has at least one opening (3) in the area of its front edge, extending along the front edge, into which a ventilation strip (4) adapted thereto with gripping recess (5) can be set and fixed by means of latch connections, whereby the ventilation strip (4) has a plurality of slot-shaped ventilation openings (6), aligned parallel to the front edge of the interior roof panel (1) and arranged in rows, these beginning at the lower side of the ventilation strip (4), which is approximately flush with the lower side of the interior roof panel (1), and, following this, being formed as ventilation ducts (7), delimited by the wall elements (8, 9, 10) of the ventilation strip (4), open to the top and directed backwards, and whereby the ventilation strip (4) has a circumferential flange edge (11), which rests against the circumferential edge of the at least one opening (3), **characterised in that** the ventilation ducts (7) are each delimited by four wall elements (8, 9, 10) of the ventilation strip (4) opposed in pairs, of which the rear wall elements (9), each together with the flange edge (11), form a location space (14), open to the side, for attaching the ventilation strip (4) to the rear edge (15) of the at least one opening (3), while latched projections (16) are provided on the front wall elements (8) in the upper area and approximately in the centre of the length of the wall elements (8), these forming the latch connections in conjunction with corresponding latched surfaces (19) on the interior roof panel (1), and that the ventilation strip (4) is mounted in the at least one opening (3) with longitudinal play (clearance 20) and the latched projections (16) can be displaced longitudinally on the latched surfaces (19).

2. Sliding interior sunroof panel according to Claim 1, **characterised in that** the latched projections (16) are injection moulded in a single part with all parts of the ventilation strip (4) and are situated close to the upper end of the front wall elements (8) of the ventilation ducts (7), approximately parallel to the plane of the interior roof panel (1).

3. Sliding interior sunroof panel according to Claim 1 or 2, **characterised in that** the interior roof panel (1), between its front edge and the at least one opening (3) has a rib (18) protruding upwards, directed parallel to the adjacent opening edge, the rib having the latched surfaces (19).

4. Sliding interior sunroof panel according to one of Claims 1 to 3, **characterised in that** the location space (14) between the rear wall element (9) of each ventilation duct (7) and the flange edge (11) has an acute-angled cross-section, widening outwardly, and that the rear edge (15) of the at least one opening (3) has a corresponding acute-angled cross-section, at least in the area of engagement with the location space (14).

## Revendications

1. Ciel coulissant pour un toit ouvrant de véhicule automobile, constitué par un corps de ciel (1) réalisé de manière rigide sous forme de plaque ou de cadre, qui est réalisé au niveau de ses deux arêtes latérales pour un montage mobile sur des rails de guidage du toit ouvrant et qui est pourvu, dans la zone de son arête antérieure, d'au moins un évidement (3) s'étendant le long de l'arête antérieure, dans lequel peut être insérée une baguette d'aération (4) adaptée à celui-ci avec poignée encastrée (5) et qui doit être fixée par des liaisons d'enclenchement, la baguette d'aération (4) présentant une multitude d'ouvertures d'aération (6) en forme de fentes, orientées parallèlement à l'arête antérieure du corps de ciel (1) et agencées en rangée, lesquelles commencent sur la face inférieure de la baguette d'aération (4), qui est approximativement en affleurement avec la face inférieure du corps de ciel (1), et lesquelles sont, en raccord à celui-ci, réalisées sous forme de canaux d'aération (8) ouverts vers le haut et orientés vers l'arrière, et limités par des éléments de paroi (8, 9 et 10) de la baguette d'aération, (4) et la baguette d'aération (4) présentant un bord à bride (11) périphérique qui repose sur un bord périphérique dudit au moins un évidement (3), **caractérisé en ce que** les canaux d'aération (7) sont délimités par respeçtivement quatre éléments de paroi (8, 9 et 10) opposés par paire, de la baguette d'aération (4), parmi les éléments de paroi (9) postérieurs, conjointement avec le bord à bride (11), forment un espace de réception (14) latéralement ouvert pour l'enfichage de la baguette d'aération (4) sur le bord postérieur (15) dudit au moins un évidement (3), tandis que sur les éléments de paroi (8) antérieurs dans la région supérieure et approximativement au milieu de la longueur des éléments de paroi (8), sont prévues des saillies d'enclenchement (16) qui conjointement avec des surfaces d'enclenchement (19) qui leurs sont associées, forment les liaisons par enclenchement sur le corps de ciel (1), et **en ce que** la baguette d'aération (4) est insérée dans ledit au moins un évidement (3) avec jeu longitudinal (fente 20) et les saillies d'enclenchement (16) peuvent être déplacées le long des surfaces d'enclenchement (19).

2. Ciel coulissant selon la revendication 1, **caractérisé en ce que** les saillies d'enclenchement (16) sont moulées par injection d'un seul tenant avec toutes les parties de la baguette d'aération (4) et sont agencées près de l'extrémité supérieure des éléments de paroi antérieurs (8) des canaux d'aération (7), approximativement parallèlement au plan du corps de ciel (1).

3. Ciel coulissant selon l'une ou l'autre des revendications 1 et 2, **caractérisé en ce que** le corps de ciel (1) possède, entre son arête antérieure et ledit au moins un évidement (3), une nervure (18) faisant saillie vers le haut et dirigée parallèlement à l'arête d'évidement voisine, nervure sur laquelle se trouvent les surfaces d'enclenchement (19).

4. Ciel coulissant selon l'une des revendications 1 à 3, **caractérisé en ce que** l'espace de réception (14) entre l'élément de paroi (9) postérieur de chaque canal d'aération (7) et le bord à bride (11) possède une section transversale en angle aigu qui s'élargit vers l'extérieur et **en ce que** le bord postérieur (15) dudit au moins un évidement (3) présente au moins dans la zone d'engagement avec l'espace de réception (14) une section transversale en angle aigu correspondante.
